# EUROPÄISCHE PATENTSCHRIFT

(11) **EP 3 115 643 B1**
(45) Veröffentlichungstag und Bekanntmachung des Hinweises auf die Patenterteilung: **27.07.2022**
(21) Anmeldenummer: 16174540.1
(22) Anmeldetag: 15.06.2016
(51) Int. Cl.: F16G 11/10

(54) **KLEMMVORRICHTUNG FÜR EIN SEIL**
CLAMPING DEVICE FOR A CABLE
DISPOSITIF DE SERRAGE POUR UN CABLE

(30) Priorität: 18.06.2015 DE 102015211254
(43) Veröffentlichungstag der Anmeldung: 11.01.2017
(73) Patentinhaber: Oberalp Spa, 39100 Bozen (IT)
(72) Erfinder: Resch, Egon, 39050 Tiers (IT)
(74) Vertreter: Weickmann & Weickmann PartmbB

(56) Entgegenhaltungen:
- US-A- 4 810 237
- US-A- 5 957 432
- US-A- 6 068 242

## Beschreibung

Die vorliegende Erfindung betrifft eine Sicherungsvorrichtung für ein Seil, umfassend eine Klemmvorrichtung, welche insbesondere im Bereich des Kletterns eingesetzt werden kann.

In vielen Bereichen ist es notwendig, die Bewegung eines Seils auf ein anderes Element zu übertragen. Hierbei kann insbesondere an ein Anhängen einer Last an ein Seil beim Klettern mit einer Steigklemme oder an das Einklemmen eines Seils an einem schwenkbaren Element, z. B. einer Seilrolle, die zur Klemmung eines Seils innerhalb einer Sicherungsvorrichtung blockiert wurde, gedacht werden.

Derartige Klemmvorrichtungen weisen in vielen Fällen das Problem auf, dass das Seil nicht sicher und zuverlässig in den Klemmbereich geführt wird und/oder dass eine Klemmung nicht unabhängig von einer Seilzugrichtung bereitgestellt werden kann.

Die Druckschrift US 6 068 242 A offenbart eine Sicherungsvorrichtung für ein Seil, umfassend eine Klemmvorrichtung gemäß dem Oberbegriff des Anspruchs 1.

Ferner sei auf die US 5 957 432 A sowie die US 4 810 237 A verwiesen.

Es ist daher die Aufgabe der vorliegenden Erfindung eine Sicherungsvorrichtung für ein Seil, umfassend eine Klemmvorrichtung bereitzustellen, welche eine besonders sichere Klemmung des Seils bereitstellt.

Diese Aufgabe wird erfindungsgemäß durch eine Sicherungsvorrichtung für ein Seil, umfassend eine Klemmvorrichtung nach Anspruch 1 gelöst. Bevorzugte Ausführungsformen der Erfindung sind in den Unteransprüchen beschrieben.

Erfindungsgemäß wird eine Sicherungsvorrichtung für ein Seil, umfassend eine Klemmvorrichtung bereitgestellt, umfassend einen ersten Wandabschnitt und einen dem ersten Wandabschnitt gegenüberliegenden zweiten Wandabschnitt, wobei der erste Wandabschnitt eine Flächenausgestaltung aufweist, welche dafür eingerichtet ist, das Seil bei Bewegung innerhalb der Klemmvorrichtung in einer ersten Axialseilbewegungsrichtung in einen Klemmbereich der Klemmvorrichtung zu bewegen, und welche dafür eingerichtet ist, das Seil bei Bewegung innerhalb der Klemmvorrichtung in einer der ersten Axialseilbewegungsrichtung entgegengesetzten zweiten Axialseilbewegungsrichtung in den Klemmbereich der Klemmvorrichtung zu bewegen. Durch die Flächenausgestaltung wird bei einer Relativbewegung des Seils zur Klemmvorrichtung das Seil in einen Klemmbereich bewegt, wodurch eine Klemmung des Seils in der Klemmvorrichtung sicher und zuverlässig unabhängig davon erreicht werden kann, in welcher Axialseilbewegungsrichtung an dem Seil gezogen wird. Die Bewegung in den Klemmbereich verläuft vorzugsweise zumindest lokal quer zur ersten und/oder zweiten Axialseilbewegungsrichtung.

Nach einem nicht beanspruchten Aspekt der Erfindung, welcher mit dem ersten Aspekt der Erfindung kombinierbar ist, wird eine Klemmvorrichtung für ein Seil bereitgestellt, umfassend: einen ersten Wandabschnitt und einen dem ersten Wandabschnitt gegenüberliegenden zweiten Wandabschnitt, dadurch gekennzeichnet, dass der erste Wandabschnitt eine Flächenausgestaltung aufweist, welche ein Transportelement aufweist, wobei bei betriebsmäßig in die Klemmvorrichtung eingelegtem Seil, das Seil und ein Kontaktabschnitt des Transportelements einen Kreuzungswinkel einschließen, welcher in einem Winkelbereich zwischen 15° und 75°, vorzugsweise in einem Winkelbereich zwischen 30° und 60°, insbesondere bei ungefähr 45° liegt. Insbesondere kann der Kreuzungswinkel über den Kontaktabschnitt oder das Transportelement konstant sein. Der Erfinder der Klemmvorrichtung hat herausgefunden, dass bei einem Kreuzungswinkel im Bereich zwischen 15° und 75°, das Seil nach einem besonders kurzem Abschnitt einer Seilbewegung in einen gewünschten Bereich der Klemmvorrichtung, wie einen Klemmbereich, bewegt wird; liegt der Kreuzungswinkel in einem Bereich zwischen 30° und 60°, so ergibt sich ferner ein günstiger Kompromiss zwischen der Länge der notwendigen Seilbewegung, um das Seil in den gewünschten Bereich zu bewegen, und einer durch den Kontaktabschnitt des Transportabschnitts hervorgerufenen Klemmwirkung. Das Optimum dieses Kompromisses wurde bei einem Kreuzungswinkel von etwa 45° erreicht. Insbesondere erlaubt ein konstanter Kreuzungswinkel entlang des Kontaktabschnitts oder des Transportelements, dass die Form des Kontaktabschnitts oder des Transportelements auf eine gewünschte Funktion hin, z. B. Klemmfunktion oder Transportfunktion, optimiert werden kann.

Die folgenden bevorzugten Ausführungsformen können sich auf beide Aspekte der Erfindung beziehen. Werden in der Beschreibung Merkmalsbezeichnungen eines vorangehend genannten Aspekts oder einer vorangehenden Ausführungsform wiederholt, so kann es sich insbesondere um das Merkmal dieses Aspekts oder dieser Ausführungsform handeln, dies ist jedoch nicht zwingend.

Der zweite Wandabschnitt kann wie der erste Wandabschnitt ausgebildet sein, um die Funktion, wie Klemmung und/oder Transport, des ersten Wandabschnitts durch ein Gegenstück zu verstärken.

Es ist möglich, dass bei betriebsmäßig in die Klemmvorrichtung eingelegtem Seil eine Axialseilbewegungsrichtung quer zu einer Seilklemmrichtung verläuft. Zwei Richtungen verlaufen quer zu einander insbesondere dann, wenn Sie einen Winkel zwischen 45° und 90°, bevorzugt zwischen 60° und 90°, besonders bevorzugt von etwa 90° einschließen. Ebenso kann eine/die Seilklemmrichtung quer zur Seilschubrichtung verlaufen. Verlaufen zwei dieser Richtungen quer zueinander, so liegt eine geringe Wechselwirkung zwischen den die Richtungen definierenden Funktionen vor und die die Funktionen begründenden Elemente können im Wesentlichen ohne eine Berücksichtigung dieser Wechselwirkung optimiert werden. Dieser Effekt kann ab einem Zwischenwinkel im Bereich von 45° und 90° beobachtet werden, er tritt verstärkt im Bereich von 60° und 90° auf und er ist am stärksten bei einem Zwischenwinkel von etwa 90° zu beobachten.

In der Klemmvorrichtung für ein Seil die Flächenausgestaltung mindestens ein Transportelement aufweisen, welches als eine Rippe ausgebildet ist und vorzugsweise in einen Klemmbereich hineinragt. Eine Rippe erlaubt auch bei einem geringen Druck des Seils auf den ersten Wandabschnitt der Rippe in das Seil einzugreifen, um sicher und zuverlässig eine Transportfunktion und/oder eine Klemmfunktion für das Seil bereitzustellen. Ragt die Rippe in den Klemmbereich hinein, so erfüllt sie sowohl eine Transport- als auch eine Klemmfunktion, welche eine Klemmung in einem Klemmbereich unterstützt. Alternativ kann das Transportelement als eine in den ersten Wandabschnitt hineinragende Struktur ausgebildet sein, welche in den Klemmbereich hineinragen kann und dann eine der oben beschriebenen Doppelfunktion analoge Doppelfunktion erfüllt. Eine solche Struktur kann durch Abtragen von wenig Material aus einem Rohling ausgefräst werden, wodurch an spezifische Anforderungen angepasste Klemmvorrichtungen kostengünstig aus einem einzelnen Rohlingstyp hergestellt werden können.

Die Flächenausgestaltung der Klemmvorrichtung weist ein Transportabschnittpaar auf, umfassend einen ersten Transportabschnitt, welcher dafür eingerichtet ist, das Seil bei Bewegung innerhalb der Klemmvorrichtung in einer ersten Axialseilbewegungsrichtung in einen ersten Klemmbereichabschnitt der Klemmvorrichtung zu bewegen, und einen zweiten Transportabschnitt, welcher dafür eingerichtet ist, das Seil bei Bewegung innerhalb der Klemmvorrichtung in einer der ersten Axialseilbewegungsrichtung entgegengesetzten zweiten Axialseilbewegungsrichtung in einen zweiten Klemmbereichabschnitt der Klemmvorrichtung zu bewegen. Hierbei kann jeder aus dem ersten Transportabschnitt und dem zweiten Transportabschnitt auf einen besonders schnellen Transport des Seils zu dem jeweiligen Klemmbereichabschnitt optimiert werden. Ferner kann der erste Transportabschnitt ein oder mehrere Transportelemente aufweisen, wobei ein Kontaktabschnitt des einen, vorzugsweise aller. Transportelemente, des ersten Transportabschnitts jeweils einen ersten Kreuzungswinkel mit einem betriebsmäßig in die Klemmvorrichtung eingelegtem Seil einschließt, von welchen jeder Kreuzungswinkel ein erstes Vorzeichen aufweist und der zweite Transportabschnitt kann ein oder mehrere Transportelemente aufweisen, wobei ein Kontaktabschnitt des einen, vorzugsweise aller Transportelemente, des zweiten Transportabschnitts jeweils einen Kreuzungswinkel mit einem betriebsmäßig in die Klemmvorrichtung eingelegtem Seil einschließt, von welchen jeder Kreuzungswinkel ein von dem ersten Vorzeichen verschiedenes zweites Vorzeichen aufweist. Diese Ausgestaltung erlaubt einen im besonderen Maße sicheren und zuverlässigen Transport des Seils zu dem jeweiligen Klemmbereichabschnitt. Der erste Transportabschnitt kann mit dem zweiten Transportabschnitt direkt in Axialseilbewegungsrichtung benachbart sein, wodurch die Fläche der Flächenausgestaltung besonders effizient zum Seiltransport ausgenutzt wird. Klemmbereichabschnitte können Teil eines Klemmbereichs sein.

Die Klemmvorrichtung kann als ein Schwenkelement, vorzugsweise als ein Rotationselement, besonders bevorzugt als eine Seilrolle, ausgebildet sein. Hierdurch ist die Klemmvorrichtung besonders geeignet, eine Rotations- oder Schwenkbewegung, insbesondere innerhalb einer Handhabungsvorrichtung für ein Seil, ausführen, wobei diese Bewegung in besonders einfacher Weise an einen zuverlässigen Sicherungsmechanismus, wie eine Fliehkraftkupplung, ankoppeln kann.

Die Klemmvorrichtung kann einen Seilumlenkabschnitt aufweisen, wobei insbesondere eine Schwenk- oder Drehachse der Klemmvorrichtung durch den Seilumlenkabschnitt hindurchlaufen kann. Durch einen von einer Geraden abweichendem Verlauf des Seils, welcher durch den Seilumlenkabschnitt bewirkt ist, kann ein Zug auf das Seil lokal zu einer gewünschten Seilbewegung führen, beispielsweise bei einer Seilrolle zu einer Bewegung zum Zentrum der Seilrolle hin. Dies kann eine Klemmung des Seils an einem Klemmbereich an dem Zentrum der Seilrolle unterstützen. Verläuft eine Schwenk- oder Drehachse der Klemmvorrichtung durch den Seilumlenkabschnitt, so kann die Klemmvorrichtung, z. B. eine Seilrolle, besonders kompakt ausgebildet sein.

In der Klemmvorrichtung können der erste Wandabschnitt und der zweite Wandabschnitt derart angeordnet sein, dass sie einen sich verjüngenden Klemmbereich der Klemmvorrichtung begrenzen. Ein derartiger Klemmbereich klemmt das Seil besonders sicher und zuverlässig.

Der sich verjüngende Klemmbereich kann einen Bodenabschnitt aufweisen, wodurch die auf das Seil maximal wirkende Klemmkraft begrenzt wird, sodass eine Überlastung des Seils verhindert werden kann. Der Bodenabschnitt bildet vorzugsweise in dem Bereich des Klemmabschnitts eine Abflachung aus, in welchem der erste Wandabschnitt und der zweite Wandabschnitt sich treffen.

Ferner ist es möglich, dass Wandteilabschnitte des ersten Wandabschnitts und des zweiten Wandabschnitts, welche den verjüngenden Klemmbereich über dessen Gesamterstreckung begrenzen, frei von Rippen, vorzugsweise glatt, ausgebildet sind. Dies erlaubt ebenso eine (ggf. zusätzliche) Reduktion der auf das Seil maximal wirkenden Klemmkraft, sodass bei zu hohen Seilbelastungen an einem in der Klemmvorrichtung geklemmten Seil ein gewisser Schlupf des Seils auftreten kann, um der Seilbelastung entgegenzuwirken.

Die Klemmvorrichtung kann dafür eingerichtet sein, das Seil ohne eine Relativbewegung von Elementen der Klemmvorrichtung in einen Klemmzustand zu überführen, in diesem Fall ist die Klemmvorrichtung aufgrund fehlender relativ zueinander beweglicher Elemente besonders störungsunanfällig.

Es wird daran gedacht, die Klemmvorrichtung so auszubilden, dass bei betriebsmäßig in die Klemmvorrichtung eingelegtem Seil in einem Klemmzustand das Seil zwischen dessen Ersteintritt in die Klemmvorrichtung und dessen Finalaustritt aus der Klemmvorrichtung durchgehend mit dem ersten Wandabschnitt, und vorzugsweise mit dem zweiten Wandabschnitt, in Kontakt ist. Hierdurch wird verhindert, dass das Seil einen Finger eines Benutzers bei einem zwischenzeitlichen Austritt aus der Klemmvorrichtung (wie z. B. bei einem Tuber) einquetschen kann, wenn das Seil in dem Klemmzustand in der Klemmvorrichtung geklemmt ist. Ist das Seil zusätzlich mit dem zweiten Wandabschnitt in Kontakt, so wird die Gefahr einer Fingerverletzung weiter reduziert.

Handelt es bei der Klemmvorrichtung der Sicherungsvorrichtung für ein Seil, um die oben beschriebene Klemmvorrichtung deren Flächenausgestaltung ein Transportabschnittpaar
aufweist, so kann der erste Transportabschnitt von dem zweiten Transportabschnitt durch einen Grenzabschnitt getrennt sein und in einem Zustand, in dem das Seil in der Klemmvorrichtung geklemmt ist, kann der Grenzabschnitt und eine Seilzugrichtung einen Winkel zwischen 90° und 60°, vorzugsweise zwischen 85° und 75°, besonders bevorzugt zwischen 83° und 82° einschließen. Vorzugsweise ist die Klemmvorrichtung in einem Zustand, in dem das Seil in der Klemmvorrichtung geklemmt ist, zumindest zeitweise in seiner Bewegung in der Sicherungsvorrichtung blockiert. Der Erfinder hat festgestellt, dass eine günstige Klemmwirkung innerhalb der Sicherungsvorrichtung in einem Zustand vorliegt, in welchem das Seil in der Klemmvorrichtung geklemmt ist, wenn der Grenzabschnitt und eine Seilzugrichtung einen Winkel zwischen 90° und 60° einschließen. Eine erhebliche Verbesserung der Klemmwirkung wurde festgestellt, wenn dieser Winkel zwischen 85° und 75° liegt, wobei sich gemäß den Versuchen des Erfinders ein Optimum der Klemmwirkung bei einem Winkel zwischen 83° und 82° einstellt.

Die vorliegende Erfindung wird im Folgenden unter Bezugnahme auf die beigefügten Figuren erläutert. Es zeigen:
Fig. 1a und 1b einen ersten Wandabschnitt einer ersten Ausführungsform einer erfindungsgemäßen Klemmvorrichtung;
Fig. 1c eine Abwandlung eines ersten Wandabschnitts der ersten Ausführungsform;
Fig 1d einen Querschnitt der ersten Ausführungsform einer erfindungsgemäßen Klemmvorrichtung;
Fig. 1e bis 1g Verläufe von Transportelementen und/oder Kontaktabschnitten;
Fig. 2 eine Abwandlung eines ersten Wandabschnitts der ersten Ausführungsform;
Fig. 3a bis 3c Ansichten von Seilrollenhälften einer zweiten Ausführungsform einer erfindungsgemäßen Klemmvorrichtung;
Fig. 3d und 3e Ansichten von Seilrollen der zweiten Ausführungsform der erfindungsgemäßen Klemmvorrichtung;
Fig. 4 eine erste Abwandlung eines zweiten Wandabschnitts der zweiten Ausführungsform;
Fig. 5a und 5b Ansichten einer zweiten Abwandlung eines ersten Wandabschnitts der zweiten Ausführungsform;
Fig. 6a und 6b Ansichten einer dritten Abwandlung eines ersten Wandabschnitts der zweiten Ausführungsform;
Fig. 6c eine Abwandlung der Klemmvorrichtung der zweiten Ausführungsform;
Fig. 7 eine Hälfte eines Seilklemmkörpers einer weiteren Ausführungsform einer erfindungsgemäßen Klemmvorrichtung;
Fig. 8 a) bis e) Strukturen von Transportelementen;
Fig. 9 eine Innenansicht einer Seilrolle der zweiten Ausführungsform mit eingelegtem Seil im geklemmten Zustand;
Fig. 10 eine Sicherungsvorrichtung mit einer Seilrolle der zweiten Ausführungsform.

Im Folgenden werden bei Abwandlungen von Ausführungsformen gelichartige Elemente, wo zweckdienlich, mit gleichen Bezugszeichen versehen.

### Erste Ausführungsform der Erfindung

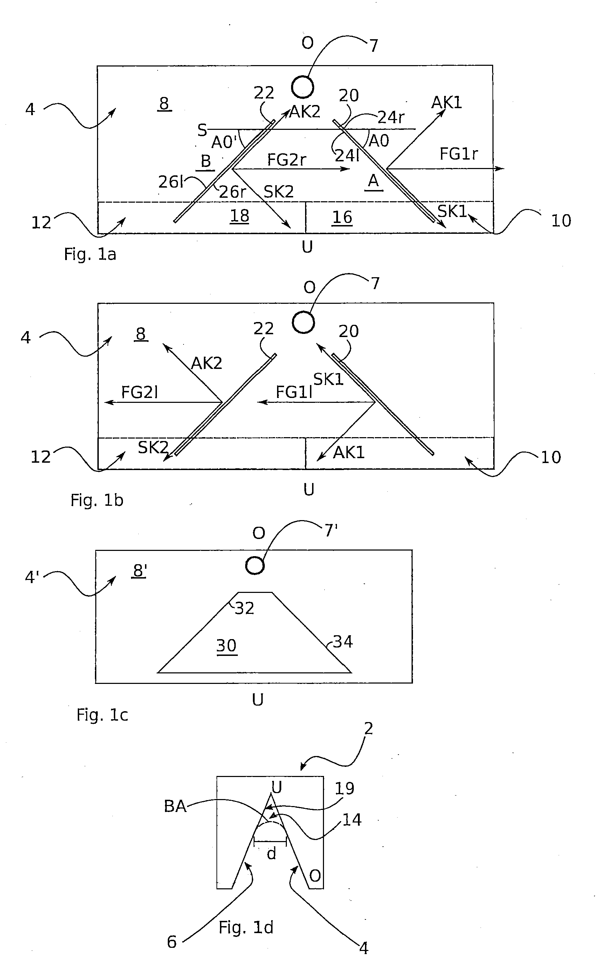

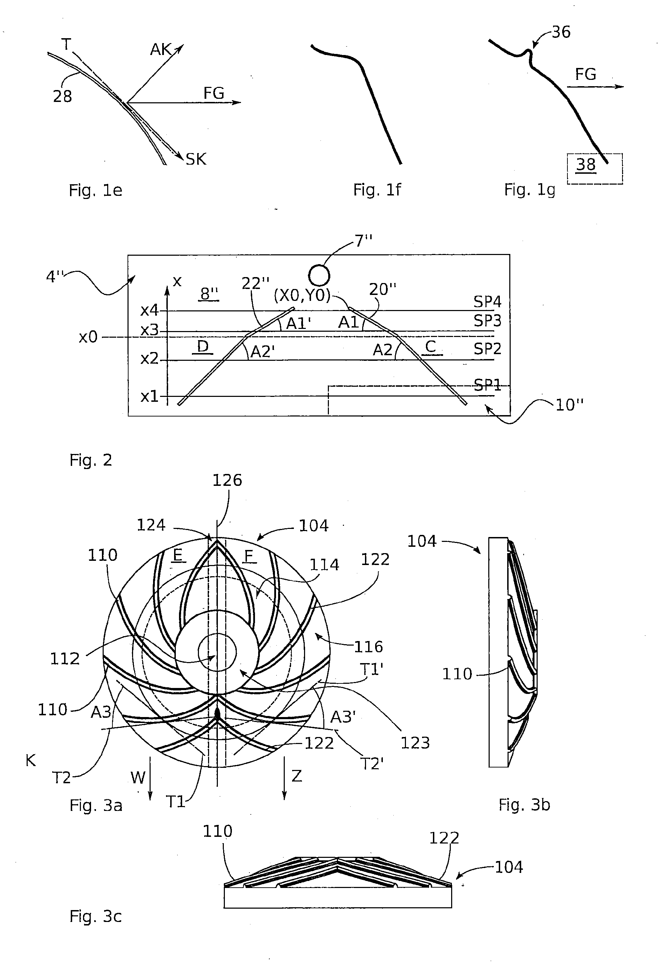

Figur 1d zeigt einen schematischen Querschnitt durch eine rillenförmige Klemmvorrichtung 2 für ein Seil, mit einem ersten Wandabschnitt 4 und einem gegenüberliegendem zweiten Wandabschnitt 6. Die Klemmvorrichtung 2 kann zur Aufnahme eines Karabiners eine Öffnung 7 (bzw. 7' oder 7") aufweisen, welche nur in den Flächenausgestaltungen der Figuren 1a bis 1c und 2 angedeutet ist. Der erste Wandabschnitt 4 umfasst eine Flächenausgestaltung 8, welche bei Bewegung eines Seils in einer ersten Axialseilbewegungsrichtung (in Richtung FG1r oder FG2r) dafür eingerichtet ist, das Seil in einen ersten Klemmbereichabschnitt 10 der Klemmvorrichtung 2 zu bewegen und bei Bewegung des Seils in einer der ersten Axialseilbewegungsrichtung entgegengesetzten zweiten Axialseilbewegungsrichtung (in Richtung FG2l oder FG1l) das Seil in einen zweiten Klemmbereichabschnitt 12 zu bewegen. Die Klemmbereichabschnitte 10 und 12, deren Begrenzung durch den ersten Wandabschnitt 4 in Fig. 1a gestrichelt eingezeichnet ist, sind Teil eines Klemmbereichs 14 der Klemmvorrichtung 2. Eine Axialseilbewegungsrichtung folgt insbesondere dem Seilverlauf.

Der erste Wandabschnitt 8 ist in der Klemmvorrichtung 2 entsprechend der Ausrichtung U-O (vergleiche Fig. 1d) angeordnet, sodass der erste Klemmbereichabschnitt 10 durch einen ersten Wandteilabschnitt 16 des ersten Wandabschnitts 4 und einen gegenüberliegenden Abschnitt des zweiten Wandabschnitts begrenzt und definiert wird, analog begrenzt und definiert ein zweiter Wandteilabschnitt 18 des ersten Wandabschnitts 4 mit einem gegenüberliegenden Abschnitt 19 des zweiten Wandabschnitts 6 den zweiten Klemmbereichabschnitt 12. Alternativ zu den Darstellungen in den Figuren 1a und 1b können die Wandteilabschnitte 16 und 18 frei von Rippen ausgebildet sein. Der Abschnitt 19 des zweiten Wandabschnitts 6 kann ebenso frei von Rippen ausgebildet sein, sodass diese Wandteilabschnitte, welche den sich verjüngenden Klemmbereich 14 über dessen Gesamterstreckung begrenzen, frei von Rippen ausgebildet sind. Dies erlaubt eine Reduzierung der auf das Seil wirkenden Klemmkraft. Zu beachten ist, dass das Seil in einem geklemmten Zustand sowohl an den rippenfreien Wandteilabschnitten, welche den Klemmbereich über dessen Gesamterstreckung begrenzen, als auch an einem mit Rippen versehenen Bereich der Klemmvorrichtung anliegen kann. Der in Fig. 1d dargestellte Klemmbereich 14 kann, wie in Fig. 1d durch die gestrichelte Linie angedeutet, einen Bodenabschnitt BA aufweisen, welcher eine Abflachung gegenüber einer V-Form in dem Bereich ausbildet, in welchem der erste Wandabschnitt den zweiten Wandabschnitt trifft. Durch den Bodenabschnitt BA können die auf das Seil wirkenden Klemmkräfte reduziert werden. Es wird bevorzugt, dass der Bodenabschnitt BA eine Breite d von etwa 2 mm oder mehr aufweist. Allgemein kann ein Vorsehen eines Bodenabschnitts in einem Klemmbereich mit dem Vorsehen von rippenfreien Wandteilabschnitten, welche den Klemmbereich über dessen Gesamterstreckung begrenzen, kombiniert werden.

Allgemein kann ein Seil, insbesondere wenn das Seil betriebsmäßig in die Klemmvorrichtung eingelegt ist, innerhalb der Klemmvorrichtung durch einen Seilpfad beschrieben werden, welcher eine Seillage definiert, beispielsweise durch eine Orthogonalprojektion der Seilmitte auf den ersten Wandabschnitt, oder eine dem Seilverlauf entsprechende Seilkontaktfläche mit dem ersten Wandabschnitt, oder durch Ähnliches. Winkel bezüglich des Seils, insbesondere Kreuzungswinkel, können entsprechend als Winkel bezüglich des jeweiligen Seilpfades verstanden werden. Entlang dieses Seilpfades kann das Seil in einer ersten Axialseilbewegungsrichtung und einer entgegengesetzten zweiten Axialseilbewegungsrichtung bewegt werden. Vorzugsweise weist die Flächenausgestaltung 8 einen ersten Transportabschnitt A auf, welcher mindestens ein beispielsweise als eine Rippe oder Ausnehmung ausgebildetes erstes Transportelement 20 aufweist und weiter bevorzugt weist die Flächenausgestaltung 8 einen zweiten Transportabschnitt B auf, welcher mindestens ein, beispielsweise als eine Rippe oder eine Ausnehmung ausgebildetes, zweites Transportelement 22 aufweist. Vorzugsweise ist mittels des ersten Transportelements 20 die Flächenausgestaltung 8 dafür eingerichtet, das Seil bei Bewegung innerhalb der Klemmvorrichtung 2 in der ersten Axialseilbewegungsrichtung in den Klemmbereich 14 zu bewegen. Entsprechend kann mittels des zweites Transportelements 22 die Flächenausgestaltung 8 dafür eingerichtet sein, das Seil bei Bewegung innerhalb der Klemmvorrichtung 2 in der zweiten Axialseilbewegungsrichtung in den Klemmbereich 14 zu bewegen. In den Figuren 1a und 1b kann ein Seilpfad entlang der Pfeile FG2r und FG1r bzw. FG2l und FG1l verlaufen, und die erste Axialseilbewegungsrichtung entspricht in diesem Fall dann der Richtung von FG1r bzw. FG2r und die zweite Axialseilbewegungsrichtung der von FG1l bzw. FG2l. Wird ein Seil in Anlage an die Flächenausgestaltung 8, wobei angenommen wird, dass die Transportelemente 20, 22 als Rippen ausgebildet sind, in der ersten Axialseilbewegungsrichtung bewegt, so greift die linke Kante 24l der Rippe 20 an dem Seil an und die so erzeugte Angriffskraft FG1r als Teil einer Zugkraft an dem Seil wird in eine Komponente SK1 (Seilschubkraft SK1 in Seilschubrichtung) parallel zur Rippe 20 und eine Komponente AK1 (Andruckkraft in Andruckrichtung) senkrecht zur Rippe 20 aufgespalten, sodass die Vektorsumme der Komponenten SK1 und AK1 FG1r ergibt. Die Seilschubkraft SK1 weist in Richtung des ersten Klemmbereichabschnitts 10 und bewegt das Seil im Fall der ersten Axialseilbewegungsrichtung in den Klemmbereich 14 und insbesondere in den ersten Klemmbereichabschnitt 10.

Der erste Transportabschnitt A bewegt das Seil somit bei Vorliegen der ersten Axialseilbewegungsrichtung in den Klemmbereich 14 und vorzugsweise in den ersten Klemmbereichabschnitt 10.

In analoger Weise greift die linke Kante 26l der Rippe 22 an dem Seil an und die Angriffskraft FG2r wird in eine Andruckkraft AK2 und eine Seilschubkraft SK2 zerlegt, wobei die Seilschubkraft SK2 das Seil in einer Seilschubrichtung, welche weg von dem zweiten Klemmbereichabschnitt 12 weist, bewegt.

In Figur 1b ist der entsprechende Fall für die zweite Axialseilbewegungsrichtung dargestellt, wobei entsprechend die Angriffskräfte FG2l, FG1l durch ein Angreifen des Seils an den rechten Kanten 24r, 26r der Rippen 20 und 22 erzeugt werden. In diesem Fall weist die Seilschubkraft SK2 in Richtung des zweiten Klemmbereichabschnitts 12 und bewegt das Seil in den Klemmbereich 14, insbesondere in den zweiten Klemmbereichabschnitt 12. Der zweite Transportabschnitt B bewegt das Seil bei Vorliegen der zweiten Axialseilbewegungsrichtung in den Klemmbereich 14 und vorzugsweise in den zweiten Klemmbereichabschnitt 12. Die direkt in Axialseilbewegungsrichtung benachbarten Transportabschnitte A und B (die direkt benachbarten Transportabschnitte A und B bezüglich der ersten und/oder zweiten Axialseilbewegungsrichtung) bilden ein Transportabschnittpaar.

Die Rippe 20 schließt mit einem betriebsmäßig in die Klemmvorrichtung eingelegten Seil, dessen Verlauf durch eine Gerade S angedeutet ist, einen Kreuzungswinkel A0 ein und die Rippe 22" schließt mit diesem Seil einen Kreuzungswinkel A0' ein. Der Kreuzungswinkel A0 weist ein positives Vorzeichen auf, das bedeutet, dass die Rippe 20, oder allgemeiner eine Gerade/Tangente, welche einen Verlauf eines Kontaktabschnitts eines hier als Rippe 20 ausgebildeten Transportelements repräsentiert, entgegengesetzt dem Uhrzeigersinn gedreht werden muss, um den Kreuzungswinkel A0 unverzüglich zu überstreichen. Der Kreuzungswinkel A0' weist ein negatives Vorzeichen auf, das bedeutet, dass die Rippe 22, oder allgemeiner eine Gerade/Tangente, welche einen Verlauf eines Kontaktabschnitts eines hier als Rippe 22 ausgebildeten Transportelements repräsentiert, im Uhrzeigersinn gedreht werden muss, um den Kreuzungswinkel A0' unverzüglich zu überstreichen. Kreuzungswinkel sind bei dieser Definition immer kleiner oder gleich 90°, wobei der Winkel von 90° ausgeschlossen werden kann, und die Bestimmung von Vorzeichen von Kreuzungswinkeln wird vorzugsweise bei Betrachtung in einer Aufsicht auf die Flächenausgestaltung vorgenommen.

Die Kanten 24l, 24r und 26l, 26r der Rippen 20 und 22 können in Kontakt mit dem Seil stehen und können entsprechend als Kontaktabschnitte von Transportelementen bezeichnet werden. An den Kontaktabschnitten kann einer Angriffskraft des Seils entstehen. Die Kontaktabschnitte und/oder die Transportelemente, insbesondere die Kanten 24l, 24r und 26l, 26r und/oder Rippen 20, 22 können einen Kreuzungswinkel zwischen 15° und 75°, vorzugsweise zwischen 30° und 60°, besonders bevorzugt einen Kreuzungswinkel von etwa 45°, mit einem betriebsmäßig in die Klemmvorrichtung eingelegtem Seil, einschließen. Es hat sich als besonders vorteilhaft herausgestellt, dass der Kreuzungswinkel zwischen einem Seil und dem Kontaktabschnitt und/oder Transportelement über deren Abschnitte konstant gehalten wird, sodass derartige Abschnitte für eine besondere Funktion, wie beispielsweise ein Einfädeln des Seils bei flachen Kreuzungswinkeln oder eine Transportfunktion und/oder Klemmfunktion bei steileren Kreuzungswinkeln, ausgebildet werden können. Die Transportelemente 20, 22 können in den Klemmbereich 14, insbesondere in die jeweiligen Klemmbereichabschnitt 10, 12 hineinragen. Zu beachten ist, dass in der Klemmvorrichtung 2 die Klemmung des Seils durch die Bewegung des Seils bewirkt wird und keine Relativbewegung von Elementen der Klemmvorrichtung hierzu notwendig ist.

In Figur 1c ist eine Ausführungsform der Erfindung ähnlich der Figur 1a gezeigt, in welcher eine Flächenausgestaltung 8' durch eine Ausnehmung 30 mit geneigten Rändern 32 und 34 als Transportelementen ausgebildet ist, welche gleichzeitig auch die Kontaktabschnitte der Transportelemente darstellen.

Es ist zu beachten, dass Transportelemente 28, wie in Figur 1e als Rippe gezeigt, und/oder deren Kontaktabschnitte auch eine gekrümmte Form aufweisen können, wobei dann zur Verdeutlichung der Wirkung des Transportelements bzw. dessen Kontaktabschnitts, analog zum für die Figuren 1a und 1b beschriebenem Vorgehen, die Angriffskraft FG in eine Seilschubkraft SK parallel und eine Andruckkraft AK senkrecht zu einer Tangente T des Transportelements 28 in einem Kreuzungspunkt eines Seilpfads mit dem Transportelement 28 oder dessen Kontaktabschnitt, zerlegt wird.

Kontaktabschnitte von Transportelementen oder Transportelemente selbst können, wie in Figuren 1e bis 1g gezeigt, eine Vielzahl von Formen aufweisen, wobei eine Ausgestaltung wie in Figur 1g nicht bevorzugt wird, da im Bereich 36 die Seilschubrichtung bei einer Axialseilbewegungsrichtung in Richtung FG von einem Klemmbereichabschnitt 38 wegweisen würde, während sie im überwiegenden Teil eines Kontaktabschnitts/Transportelements mit dieser Form bei dieser Axialseilbewegungsrichtung in Richtung des Klemmbereichabschnitts 38 weist.

Zu beachten ist, dass das Seil, wenn es betriebsmäßig in die Klemmvorrichtung 2 eingelegt ist (hier parallel zu FG1r oder FG1l) und es in einen Klemmzustand übergeht, insbesondere also in den Klemmbereich 14 bewegt wird, zwischen dem ersten Punkt, in welchem es in die Klemmvorrichtung 2 eintritt (Ersteintritt, entspricht z. B. der linken Seite des ersten Wandabschnitts 4 der Klemmvorrichtung 2 in Fig. 1a), und dem letzten Punkt, in welchem aus der Klemmvorrichtung 2 austritt (Finalaustritt, entspricht z. B. der rechten Seite des ersten Wandabschnitts 4 der Klemmvorrichtung 2 in Fig. 1a) durchgehend mit dem ersten Wandabschnitt 4, und vorzugsweise mit dem zweiten Wandabschnitt 6 in Kontakt ist. Im Gegensatz zu Tubern oder ähnlichen Systemen verbleibt das Seil sicher innerhalb der Klemmvorrichtung 2 und schütz dadurch den Benutzer der Klemmvorrichtung 2 vor Quetschungen durch das Seil.

Wird ein betriebsmäßig in die Klemmvorrichtung 2 eingelegtes Seil in dem Klemmbereich 14 geklemmt, so wirkt auf das Seil eine klemmende Kraft, welche von dem ersten Wandabschnitt 4 weg weist, was eine Seilklemmrichtung definiert, und eine weitere klemmende Kraft wirkt das Seil, welche von dem zweiten Wandabschnitt 6 weg weist, was wiederum eine weitere Seilklemmrichtung definiert. Diese Seilklemmrichtungen verlaufen vorzugsweise, zumindest lokal, jeweils quer zu der ersten und zweiten Axialseilbewegungsrichtung und können jeweils senkrecht zu dem jeweiligen ersten bzw. zweiten Wandabschnitt 4 bzw. 6 ausgerichtet sein.

Der Gestaltung eines Transportelements und/oder dessen Kontaktabschnitt, (wobei auf eine Gestaltung eines Kontaktabschnitts nicht explizit eingegangen wird, diese erfolgt analog zur Gestaltung eines Transportelements) kann folgender Gedanke zugrunde gelegt werden: Soll ein Transportelement mit einem Seil abschnittsweise einen vorbestimmten Kreuzungswinkel einschließen oder soll dieser Kreuzungswinkel einen bestimmten Verlauf aufweisen, so würde ein Punkt P, welcher sich entlang des Transportelements bewegt, sich immer in einer Richtung bewegen, welche den gewünschten Kreuzungswinkel mit dem Seil einschließt. Legt man fest, dass die Geschwindigkeit des Punktes konstant ist, so ist der Verlauf des Transportelements der Pfad einer Lösung einer Differenzialgleichung, deren Ableitung diese Geschwindigkeit ist. Diese Differenzialgleichung kann wie folg konstruiert werden:
In einem ersten Schritt wird eindeutig festgelegt, wie gewünschte Seilpfade innerhalb der Klemmvorrichtung entlang der Flächenausgestaltung verlaufen sollen (diese können von den realen Seilpfaden abweichen, siehe zweite Ausführungsform). Dies können, wie beispielsweise in Fig. 2 gezeigt, Geraden mit einer konstanten X-Komponente (als Auswahl sind Geraden SP1 bis SP4 mit konstanter X-Komponente x1 bis x4 gezeigt) sein. Dies ergibt eine Schar von Seilpfaden, welche die gesamte Flächenausgestaltung so überdeckt, dass ein Punkt der Flächenausgestaltung 8" des ersten Wandabschnitts 4" zu genau einem Seilpfad aus der Seilpfadschar gehört. Ferner wird für die gesamte Seilpfadschar eine gemeinsame erste Axialseilbewegungsrichtung und eine entgegengesetzte gemeinsame zweite Axialseilbewegungsrichtung festgelegt. In Fig. 2 soll die erste gemeinsame Axialseilbewegungsrichtung nach rechts verlaufen, die zweite gemeinsame Axialseilbewegungsrichtung nach links. Bei gemeinsamen Axialseilbewegungsrichtungen soll sichergestellt werden, dass bei benachbarten Seilpfaden die ersten Axialseilbewegungsrichtungen im Wesentlichen nicht entgegengesetzt zueinander verlaufen.

Im zweiten Schritt wird festgelegt, in welche Richtung relativ zu dem jeweiligen Seilpfad bei einer Axialseilbewegungsrichtung an jedem Punkt das Transportelement verlaufen soll und somit die Seilschubrichtung zu verlaufen hat. Dies definiert ein Richtungsfeld, welches in jedem Punkt in die gewünschte Seilschubrichtung zeigt und definiert somit die gewünschten Kreuzungswinkel. Definiert man das Richtungsfeld in jedem Punkt als ein Vektorfeld mit einer einheitlichen Amplitude, so wird ein Geschwindigkeitsfeld definiert, welches gerade die Ableitung der Bewegung des oben beschriebenen Punkts P ist.

In Fig. 2 soll beispielsweise bei der ersten Axialseilbewegungsrichtung für x > x0 die Seilschubrichtung unter dem Kreuzungswinkel A1 gegenüber den Seilpfaden verlaufen und nach unten in Richtung des ersten Klemmbereichabschnitts 10" weisen. Für den Bereich x ≤ x0 soll die Seilschubrichtung unter dem Kreuzungswinkel A2 gegenüber den Seilpfaden verlaufen und nach unten zum Klemmbereichabschnitt 10" weisen.

Eine Rippe 20" folgt vom Punkt (X0,Y0), einer Anfangsbedingung der Differenzialgleichung, abschnittsweise der Lösung der durch das Geschwindigkeitsfeld definierten Differenzialgleichung. Weist das Geschwindigkeitsfeld, wie beispielsweise bei x = x0 eine Unstetigkeit auf, so wird wie bei Differenzialgleichungen üblich, eine Lösung bis an die Unstetigkeitsstelle verwendet, und wenn notwendig beginnend an der Unstetigkeitsstelle eine andere Lösung mit entsprechenden neuen Startbedingungen fortgeführt, sodass vorzugsweise eine stetige Gesamtlösung entsteht.

Ein entsprechendes Vektorfeld kann für die zweite Axialseilbewegungsrichtung definiert werden und eine Rippe 22" folgt dann entsprechend einer Lösung der entstehenden Differenzialgleichung. Einzelne Transportelemente und/oder deren Kontaktabschnitte können somit jeweils Pfaden von Lösungen unterschiedlicher Differenzialgleichungen folgen.

Die jeweiligen Bereiche der Rippen 20", 22" für x>x0 und x ≤ x0 können selbst, oder die Kanten und/oder Flächen dieser Bereiche der Rippen 20", 22" als Kontaktabschnitte eines Transportelements angesehen werden, sodass diese Kontaktabschnitte vollkommen analog zu der Gestaltung der Rippen 20", 22" gestaltet werden können.

Dieses allgemeine Prinzip erlaubt es, insbesondere für einzelne Transportelemente und/oder einzelne Kontaktabschnitte eines Transportelements auch bei komplizierten Seilverläufen in der Klemmvorrichtung, welche dann durch eine entsprechende Seilpfadschar angegeben werden, Verläufe als Pfade von Lösungen von Differenzialgleichungen zu konstruieren, welche z. B. abschnittsweise unter einem konstanten Kreuzungswinkel zum Seil verlaufen. Insbesondere ist bei solchen Seilpfadscharen bei Seilrollen an konzentrische Kreise gedacht und bei elliptisch ausgebildeten Seilrollen ist an Ellipsen mit festen Brennpunkten gedacht, deren Hauptachse als Parameter verwendet wird. Im Allgemeinen kann an parametrisierte Kegelschnitte oder Kegelschnittabschnitte als Seilschaaren gedacht werden.

Die Differenzialgleichungen können numerisch gelöst werden.

Zu beachten ist ferner, dass Kreuzungswinkel A1 und A2 der Rippe 20" in einem Transportbereich C ein positives Vorzeichen aufweisen, während Kreuzungswinkel A1' und A2' der Rippe 22" in einem Transportbereich D ein negatives Vorzeichen aufweisen.

### Zweite Ausführungsform der Erfindung

Im Folgenden wird eine zweite Ausführungsform der Erfindung beschrieben. Die Seilrollenhälften 104', 105 und 108 sind ähnlich der Seilrollenhälfte 104 aufgebaut, sodass im Folgenden nur auf wesentliche Unterschiede dieser Abwandlungen Bezug genommen wird. Die Funktionen der Transportelemente und Kontaktabschnitte der zweiten Ausführungsform entsprechen denen der ersten Ausführungsform. Vorzugsweise sind Flächenausgestaltungen der Seilrollenhälften einer Seilrolle spiegelsymmetrisch zueinander aufgebaut.

In der zweiten Ausführungsform der Erfindung ist die erfindungsgemäße Klemmvorrichtung für ein Seil als eine Seilrolle 102 ausgebildet, welche aus zwei gleichartigen Seilrollenhälften 104 und 106 zusammengesetzt ist. Die Seilrollenhälfte 104 weist einen ersten Wandabschnitt 116 auf und die Seilrollenhälfte 106 weist einen zweiten gegenüberliegenden Wandabschnitt 118 auf. Der erste Wandabschnitt 116 weist eine Flächenausgestaltung auf, welche dafür eingerichtet ist, ein Seil bei Bewegung innerhalb der Klemmvorrichtung 102 in einer ersten Axialseilbewegungsrichtung in einen Klemmbereich 114 der Klemmvorrichtung 102 unter Verwendung von Transportelementen, beispielsweise Rippen 110, zu bewegen, und welche dafür eingerichtet ist, das Seil bei Bewegung innerhalb der Klemmvorrichtung 102 in einer der ersten Axialseilbewegungsrichtung entgegengesetzten zweiten Axialseilbewegungsrichtung in den Klemmbereich 114 der Klemmvorrichtung 102 unter Verwendung von Transportelementen, beispielsweise Rippen 122, zu bewegen. Es kann alternativ eine erste Seilrollenhälfte, welche den erfindungsgemäßen Aspekt der Flächenausgestaltung des ersten und/oder zweiten Aspekts aufweist, und eine zweite Seilrollenhälfte 108 mit einem zweiten Wandabschnitt, welche, wie abgebildet, den Aspekt der Flächenausgestaltung des zweiten Aspekts der Erfindung aufweist, verwendet werden. Die zweite Seilrollenhälfte kann jedoch auch nur den Aspekt der Flächenausgestaltung des ersten Aspekts der Erfindung aufweisen oder eine beliebige Flächenausgestaltung aufweisen.

Die Flächenausgestaltungen der Seilrollenhälften 104, 106 weisen jeweils Transportabschnitte E und F auf, wobei der Transportabschnitt E eine Mehrzahl von Rippen 110 aufweist, welche mit um die Drehachse 112 konzentrischen Kreisen, von welchen nur ein Kreis K dargestellt ist, einen konstanten Kreuzungswinkel A3, vorzugsweise von 45°, einschließen. Dies gilt ebenso für Kontaktabschnitte, beispielsweise Rippenkanten, dieser Rippen. Der Kreuzungswinkel A3, welcher ein negatives Vorzeichen Aufweist, wird hier von einer Tangente T1 des Kreises K und einer Tangente T2 einer Rippenkante eingeschlossen, jedoch kann die Richtung der Rippe anstelle einer Tangente einer Rippenkante auch durch eine den mittigen Verlauf dieser Rippe an einer geeigneten Stelle repräsentierenden Gerade dargestellt werden.

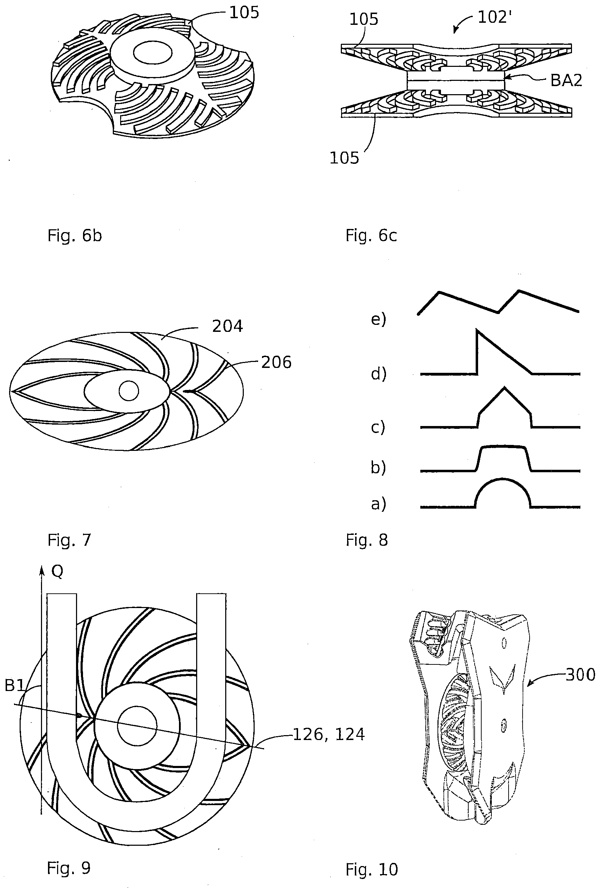

Die konzentrischen Kreise stellen jeweils Seilpfade dar, wobei zu beachten ist, dass das Seil üblicherweise nicht die gesamte Seilrolle umgibt, jedoch in dem Bereich, in welchem das Seil geklemmt wird, liegt das Seil im Wesentlichen entlang einer Kreislinie an dem Wandabschnitt an (vergleiche z. B. Figur 9). Somit sind die Seilpfade, welche die Seilpfadscharen bilden, so zu wählen, dass diese optimal den Lauf des Seils in den Transportabschnitten beschreiben, wenn es zu einer Klemmung eines Seils kommt.

Die Rippen 110 führen ein Seil, welches in Richtung W belastet wird, nach innen, wo ein Klemmbereich 114 (angedeutet durch eine gestrichelte schematische Begrenzung auf dem ersten Wandabschnitt 116) der Seilrolle ausgebildet sein kann. Der Klemmbereich 114 kann dadurch entstehen, dass der erste Wandabschnitt 116 und der zweite Wandabschnitt 118 der Klemmvorrichtung so angeordnet sind, dass deren Abstand sich zumindest abschnittsweise verringert, wodurch sie den sich verjüngenden, vorzugsweise V-förmigen, Klemmbereich 114 der als Seilrolle ausgebildeten Klemmvorrichtung 102 begrenzen. Ein Kern 123 der Seilrolle 102, durch welchen die Drehachse 112 der Seilrolle 102 verläuft, lenkt das Seil als ein Seilumlenkabschnitt um. In den erfindungsgemäßen Klemmvorrichtungen 102 und 102' verlaufen die Seilklemmrichtungen quer zur ersten und/oder zweiten Axialseilbewegungsrichtung. Analog zur ersten Ausführungsform kann in dem Klemmbereich 114 ein durch eine gestrichelte Linie angedeuteter Bodenbereich BA1 vorgesehen sein, welcher vorzugsweise eine Breite d1 von etwa 2 mm oder mehr aufweist. Ebenso kann der Klemmbereich 114 von rippenfreien Wandabschnitten begrenzt sein, dies kann dadurch erreicht werden, indem z.B. zwei Seilrollen 104' dahingehend modifiziert werden, dass die in dem gestrichelten Kreis hineinragenden Rippenabschnitte 110'a, 122'a der Rippen 110', 122' entfernt werden und diese modifizierten Seilrollenhälften zu einer Seilrolle zusammengesetzt werden. Die Abschnitte der Flächenausgestaltung innerhalb der gestrichelten Kreise sind frei von Rippen und begrenzen einen sich verjüngenden Klemmbereich der Seilrolle über dessen Gesamterstreckung. Das Vorsehen des Bodenbereichs BA1 und der Wandabschnitte, die frei von Rippen sind, kann miteinander kombiniert werden. Allgemein kann, wie in Figur 6c gezeigt, ein Bodenabschnitt BA2 in einer Seilrolle 102' durch eine im Wesentlichen zur Seilrollenachse parallele Ebene ausgebildet sein, welche in einem V-förmigen Klemmbereich eingefügt ist. Hierdurch kann zusätzlich zu den oben beschriebenen Vorteilen eine Seilabnutzung reduziert werden.

Vorzugsweise reichen die Transportelemente 110, insbesondere deren Kontaktabschnitte zumindest teilweise in den Klemmbereich 114 hinein, sodass das Seil sicher in den Klemmbereich 114 hinein geführt wird und die Klemmung des Seils durch die Rippen- bzw. Transportelemente 110 oder deren Kontaktabschnitte unterstützt werden kann.

Die Rippen 122 des Transportabschnitts F übernehmen eine den Rippen 110 des Transportabschnitts E entsprechende Funktion, wenn das Seil in Richtung Z belastet wird und schließen vorzugsweise (bzw. deren Kontaktabschnitte) mit den um die Drehachse 112 konzentrischen Kreisen einen konstanten Kreuzungswinkel A3' (vergleiche Tangenten T1' und T2') mit positivem Vorzeichen von etwa 45° ein.

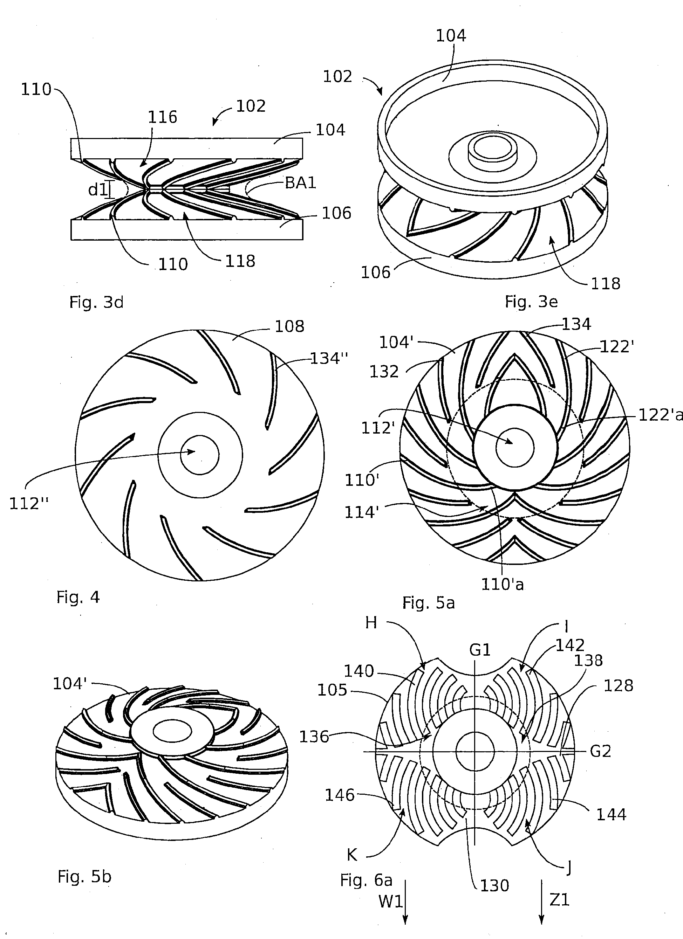

Werden zwei mit Transportabschnitten E, F versehene Seilrollenhälften, beispielsweise zwei Seilrollenhälften 104 und 106 zu einer Seilrolle 102 zusammengefügt, so ist bevorzugt, dass sich gleichwirkende, also zum selben Klemmbereichabschnitt führende, Transportabschnitte, über große Abschnitte der Transportabschnitte gegenüberliegen. Vorzugsweise ist diese Bedingung über die gesamten Transportabschnitte erfüllt und insbesondere liegen sich die einzelnen Transportelemente der jeweiligen Transportabschnitte, hier Rippen, der Seilrollenhälften 104, 106 gegenüber, siehe Fig. 3d.

In Axialseilbewegungsrichtung direkt benachbarte Transportabschnitte, wie die Transportabschnitte E und F in Fig. 3a, sind vorzugsweise durch einen Grenzabschnitt 124, insbesondere eine Grenzlinie 126 getrennt. Die direkt in Axialseilbewegungsrichtung benachbarten Transportabschnitte E und F bilden ein Transportabschnittpaar.

Während in Figur 3a die Rippen bis zur Grenzlinie aufeinander zulaufen, können die Rippen voneinander, wie beispielsweise in der in Figuren 6a und 6b gezeigten Seilrollenhälfte 105, durch einen rippenfreie Bereich, z.B. 128 bzw. 130 getrennt sein, wobei diese Grenzabschnitte durch Linien G1 bis G4 angedeutet sind.

Eine solche geometrische Trennung ist dadurch begründet, dass der Erfinder herausgefunden hat, dass es vorteilhaft ist, wenn zwischen der Richtung Q, in welcher an dem Seil gezogen wird, und dem Grenzabschnitt 124 (angedeutet in Fig. 9 durch die Grenzlinie 126) ein Winkel B1 zwischen 60° und 90°, vorzugsweise ein Winkel zwischen 75° und 85°, besonders bevorzugt zwischen 82° und 83°, vorliegt, wenn das Seil geklemmt wird. Dieses Merkmal findet insbesondere in Sicherungsvorrichtungen 300 (einer Ausbildung einer Handhabungsvorrichtung für ein Seil) mit einem als Seilrolle ausgebildeten, erfindungsgemäßen Klemmelement Verwendung, in welchem die Seilrolle, in einer für jede Drehrichtung der Seilrolle vorbestimmten Position, oder in einer Anzahl von Grenzabschnitten entsprechenden, für jede Drehrichtung der Seilrolle vorbestimmten, Positionen, durch eine Fliehkraftkupplung blockiert werden kann. Liegt eine Blockierung der Seilrolle in der Sicherungsvorrichtung in einer der vorbestimmten Positionen vor, so liegt der gewünschte Winkel B1 zwischen der Richtung Q und dem Grenzabschnitt vor. In FIG.9 ist ein geklemmter Zustand eines besonders dicken Seils dargestellt, sodass die Klemmung weit entfernt von einer Seilrollenmitte stattfinden kann. Je dünner das Seil, desto weiter innen in der Seilrolle, und somit weiter in einem Klemmbereich der Seilrolle, kann die Klemmung des Seils stattfinden.

Wie in Figuren 5a und 5b gezeigt, kann die Anzahl der Rippen in einem Transportabschnitt der Seilrollenhälfte 104', welche in den Klemmbereich 114' führen, geringer sein, als die Gesamtanzahl der in dem Transportabschnitt verwendeten Rippen. Dadurch kann in einem Bereich außerhalb des Klemmbereichs 114', in welchem das Seil üblicherweise über eine größere Länge als im Klemmbereich 114' an der Flächenausgestaltung anliegt, eine hohe Anzahl an Rippen bereitgestellt werden, um das Seil sicher nah an den Klemmbereich zu führen. Eine hohe Dichte der Rippen im Klemmbereich würde eine glatte Fläche annähern, sodass das Seil zwischen den einzelnen Rippen sich nicht stark genug ausdehnen könnte, was die Klemmwirkung verringern würde. Aus diesem Grund sind Rippen 132, welche nicht in den Klemmbereich 114' hineinreichen, zwischen die Rippen 110' eingefügt, welche in den Klemmbereich 114' hineinreichen. Entsprechendes gilt für die Rippen 134, welche zwischen die Rippen 122' eingefügt worden sind. Jede der Rippen 110' und 132 bzw. deren Kontaktabschnitte schließen mit um eine Drehachse 112' konzentrischen Kreisen einen konstanten Kreuzungswinkel von etwa 45°ein, entsprechendes gilt für jede der Rippen 122' und 134. Die Seilrollenhälfte 104' kann ausgehend von der Seilrollenhälfte 104 dadurch ausgebildet werden, dass die Rippen 132 in den Transportabschnitt E, und die Rippen 134 in den Transportabschnitt E eingefügt werden.

Jede der Rippen 134" der Seilrollenhälfte 108 bzw. deren Kontaktabschnitte schließen mit um eine Drehachse 112" konzentrischen Kreisen einen konstanten Kreuzungswinkel von etwa 45°ein, da die Form und Anordnung der Rippen 134" eine Fortführung der Anordnung der Rippen 134 aus FIG. 5a um den gesamten Umfang der Seilrolle 108 darstellen.

Zur Verbesserung der Übersichtlichkeit wurde jedoch bei den Seilrollenhälften 104' und 108 auf die Darstellung der konzentrischen Kreise der Winkel in den Figuren verzichtet.

Die Figuren 6a und 6b zeigen eine weitere Ausführungsform einer Seilrollenhälfte einer Klemmvorrichtung gemäß dem ersten Aspekt der Erfindung, wobei jedoch vier Transportabschnitte H, I, J und K angeordnet sind. Hierbei bilden jeweils zwei direkt in Axialseilbewegungsrichtung benachbarte, also nur durch einen Trennbereich oder eine Trennlinie (hier durch Linien G1 bis G4 angedeutet) getrennte, Transportabschnitte ein Transportabschnittpaar, umfassend einen ersten Transportabschnitt, beispielsweise Transportabschnitt H, welcher dafür eingerichtet ist, das Seil bei Bewegung in Richtung W1 in Richtung eines ersten Klemmbereichabschnitts 136 eines Klemmbereichs zu führen und einen direkt in Axialseilbewegungsrichtung benachbarten Transportabschnitt I, welcher dafür eingerichtet ist, das Seil bei Bewegung in Richtung Z1 in einen zweiten Klemmbereichabschnitt 138 des Klemmbereichs der Klemmvorrichtung zu bewegen (die Klemmbereichabschnitte sind durch ihre Begrenzungen auf der Flächenausgestaltung aus einer gestrichelten Kreislinie und den Linien G4 und G1 bzw. G1 und G2 angedeutet, analog ist der Klemmbereich durch die gestrichelte Kreislinie angedeutet), wobei entlang eines Seilpfades (z. B. einer Kreislinie) die Richtungen W1 und Z1, ebenso wie die Richtungen W und Z in Fig. 3a, entgegengesetzt ausgerichtet sind. Zu beachten ist auch, dass jeweils zwei in Axialseilbewegungsrichtung benachbarte Transportabschnitte, also die Transportabschnitte H, I oder I, J oder J, K oder K, H jeweils ein Transportabschnittpaar bilden können. Durch das Anordnen mehrerer Transportabschnittpaare kann eine optimale Stellung eines Grenzbereichs (angedeutet durch Linien G1 bis G4) in einem Sicherungsgerät vorliegen, sodass eine besonders günstige Klemmwirkung nach einer Drehung um einen kürzeren Bereich bereitgestellt wird, als wenn nur ein einzelnes Transportabschnittpaar vorliegen würde. In den Transportabschnitten H, I, J und K kann die Führung eines Seils in jeweilige Klemmbereichabschnitte des Klemmbereichs durch jeweilige Transportelemente, z.B. Rippen, 140, 142, 144 und 146 bewirkt werden.

Obwohl die Klemmvorrichtung der oben dargelegten Ausführungsform als eine Seilrolle, welche sich drehen oder nur über einen gewissen Winkelbereich verschwenkt werden kann, dargestellt worden ist, kann die Klemmvorrichtung an einem Rotations- und/oder Schwenkelement, wie beispielsweise einem elliptischen Seilklemmkörper, dessen eine Hälfte 204 mit Transportelementen 206 in FIG. 7 dargestellt ist, angewendet werden.

Zur Vereinfachung wurden die oben ausgeführten Ausführungsformen hauptsächlich mit als Rippen ausgebildeten Transportelementen innerhalb der Transportabschnitte beschrieben. Erfindungsgemäß sind die Transportelemente abschnittsweise, als aus einem Wandabschnitt herausragende Strukturen und/oder als abschnittsweise in einen Wandabschnitt hineinragende Strukturen ausgebildet.

In Figur 8 sind unterschiedliche Formen derartiger Strukturen ausgebildet, wobei je nach Orientierung diese als herausragende Strukturen oder hineinragende Strukturen anzusehen sind. So kann die Struktur gemäß Fig 8 a) beispielsweise als eine halbrunde Erhöhung oder Vertiefung ausgebildet sein, oder gemäß Fig 8 b) als eine im Wesentlichen kastenförmige Erhöhung oder Vertiefung. Ebenso kommt als Transportelement oder dessen Abschnitt eine symmetrische Zackenerhöhung oder Zackenvertiefung gemäß Fig. 8 c) in Frage, wobei auch eine asymmetrische dreiecksförmige Erhebung oder Vertiefung gemäß Fig. 8 d) möglich ist. Ebenso ist es möglich, dass ein Transportelement eine Kombination von mehreren Vorsprungs- oder Ausnehmungsstrukturen in einem Abschnitt aufweist, wie es in Figur 8 e) dargestellt ist.

Bei einer als Seilrolle ausgebildeten Klemmvorrichtung kann von einem Ersteintritt eines Seils in die Klemmvorrichtung gesprochen werden, sobald das Seil mit dem ersten und dem zweiten Wandabschnitt in Kontakt kommt, verlässt das Seil diesen Kontakt endgültig, so kann von dem Finalaustritt des Seils aus der Seilrolle gesprochen werden. Hierbei wird immer an ein Straff gespanntes Seil gedacht, sodass etwaiges Schlackern des Seils keine Rolle bei dieser Betrachtung spielt.

Die Richtungen W und Z bzw. W1 und Z1 können in den jeweiligen Figuren als eine Andeutung einer Axialbewegungsrichtung in bzw. gegen den Uhrzeigersinn verstanden werden.

Die Seilrollenhälften 104, 104', 105, 106 und die Hälfte 204 eines Seilklemmkörpers weisen eine Flächenausgestaltung gemäß dem ersten Aspekt der Erfindung auf. Die Seilrollenhälften 104, 104', 106 und 108 weisen eine Flächenausgestaltung gemäß dem zweiten Aspekt der Erfindung auf. In der obigen Beschreibung ist dementsprechend insbesondere auf Unterschiede der jeweiligen Abwandlungen eingegangen worden.

Auch wenn die Seilrollen oder Seilklemmkörper als aus zwei separaten Hälften zusammengesetzt beschrieben worden sind, können sie aus einem Stück hergestellt werden, wobei die oben beschriebenen Hälften dann als Teile einer einstückigen Seilrolle oder eines einstückigen Seilklemmkörpers zu verstehen sind.

Zur Wahrung der Übersicht in den Figuren ist nicht jedes einzelne Transportelement bzw. nicht jede einzelne Rippe (oder deren Abschnitte) mit einem Bezugszeichen versehen worden, sondern es sind nur einzelne Transportelemente bzw. Rippen (oder deren Abschnitte) mit einem Bezugszeichen versehen worden.

## Patentansprüche

1. Sicherungsvorrichtung (300) für ein Seil, umfassend eine Klemmvorrichtung (2; 102; 102'), umfassend:
einen ersten Wandabschnitt (4; 116) und
einen dem ersten Wandabschnitt (4; 116) gegenüberliegenden zweiten Wandabschnitt (6; 118),
wobei der erste Wandabschnitt (4; 116) eine Flächenausgestaltung aufweist, welche ein Transportelement (20, 22; 110, 122; 110', 122', 132, 134) aufweist, welches als eine abschnittsweise aus dem Wandabschnitt (4; 116) herausragende Struktur und/oder als eine abschnittsweise in den Wandabschnitt (4; 116) hineinragende Struktur ausgebildet ist,
wobei die Flächenausgestaltung dafür eingerichtet ist,
das Seil bei Bewegung innerhalb der Klemmvorrichtung (2; 102; 102') in einer ersten Axialseilbewegungsrichtung in einen Klemmbereich (14; 114) der Klemmvorrichtung (2; 102; 102') zu bewegen, und dafür eingerichtet ist,
das Seil bei Bewegung innerhalb der Klemmvorrichtung (2; 102; 102') in einer der ersten Axialseilbewegungsrichtung entgegengesetzten zweiten Axialseilbewegungsrichtung in den Klemmbereich (14; 114) der Klemmvorrichtung (2; 102; 102') zu bewegen, **dadurch gekennzeichnet, dass**
die Flächenausgestaltung des ersten Wandabschnitts (4; 116) ein Transportabschnittpaar aufweist, umfassend einen ersten Transportabschnitt (A; E), welcher dafür eingerichtet ist, das Seil bei Bewegung innerhalb der Klemmvorrichtung (2; 102; 102') in einer ersten Axialseilbewegungsrichtung in einen ersten Klemmbereichabschnitt (10; 136) des Klemmbereichs (14; 114) der Klemmvorrichtung (2; 102; 102') zu bewegen, und einen zweiten Transportabschnitt (B; F), welcher dafür eingerichtet ist, das Seil bei Bewegung innerhalb der Klemmvorrichtung (2; 102; 102') in einer der ersten Axialseilbewegungsrichtung entgegengesetzten zweiten Axialseilbewegungsrichtung in einen zweiten Klemmbereichabschnitt (12; 138) des Klemmbereichs (14; 114) der Klemmvorrichtung (2; 102; 102') zu bewegen, wobei der erste Transportabschnitt (A; E) dem zweiten Transportabschnitt (B, F) direkt in Axialseilbewegungsrichtung benachbart ist.

2. Sicherungsvorrichtung (300) nach Anspruch 1 wobei bei betriebsmäßig in die Klemmvorrichtung (2; 102; 102') eingelegtem Seil, das Seil und ein Kontaktabschnitt des Transportelements (20, 22; 110, 122; 110', 122', 132, 134) einen Kreuzungswinkel (A1, A2; A3) einschließen, welcher in einem Winkelbereich zwischen 15° und 75°, vorzugsweise in einem Winkelbereich zwischen 30° und 60°, insbesondere bei ungefähr 45° liegt.

3. Sicherungsvorrichtung (300) nach einem der vorhergehenden Ansprüche, wobei bei betriebsmäßig in die Klemmvorrichtung (2; 102; 102') eingelegtem Seil eine Axialseilbewegungsrichtung quer zu einer Seilklemmrichtung verläuft.

4. Sicherungsvorrichtung (300) nach einem der vorhergehenden Ansprüche, wobei das Transportelement (20, 22; 110, 122; 110', 122')als eine Rippe ausgebildet ist und vorzugsweise in einen Klemmbereich (14; 114) hineinragt.

5. Sicherungsvorrichtung (300) nach einem der vorhergehenden Ansprüche, wobei die Klemmvorrichtung (102; 102') als ein Schwenkelement, vorzugsweise als ein Rotationselement, besonders bevorzugt als eine Seilrolle, ausgebildet ist.

6. Sicherungsvorrichtung (300) nach Anspruch 5, wobei die Klemmvorrichtung (102; 102') einen Seilumlenkabschnitt (123) aufweist und insbesondere eine Schwenk- oder Drehachse (112) der Klemmvorrichtung (102; 102') durch den Seilumlenkabschnitt (123) hindurchläuft.

7. Sicherungsvorrichtung (300) nach einem der vorhergehenden Ansprüche, wobei der erste Wandabschnitt (4; 116) und der zweite Wandabschnitt (6, 118) derart angeordnet sind, dass sie einen sich verjüngenden Klemmbereich der Klemmvorrichtung (2; 102; 102') begrenzen.

8. Sicherungsvorrichtung (300) nach Anspruch 7, wobei der sich verjüngende Klemmbereich einen Bodenabschnitt (BA; BA1; BA2) aufweist.

9. Sicherungsvorrichtung (300)nach einem der Ansprüche 7 oder 8, wobei Wandteilabschnitte des ersten Wandabschnitts (4; 116) und des zweiten Wandabschnitts (6, 118), welche den verjüngenden Klemmbereich über dessen Gesamterstreckung begrenzen, frei von Rippen ausgebildet sind.

10. Sicherungsvorrichtung (300) nach einem der vorhergehenden Ansprüche, wobei die Klemmvorrichtung (2; 102; 102') dafür eingerichtet ist, das Seil ohne eine Relativbewegung von Elementen der Klemmvorrichtung (2; 102; 102') in einen Klemmzustand zu überführen.

11. Sicherungsvorrichtung (300) nach einem der vorhergehenden Ansprüche, wobei bei betriebsmäßig in die Klemmvorrichtung (2; 102; 102') eingelegtem Seil in einem Klemmzustand das Seil zwischen dessen Ersteintritt in die Klemmvorrichtung und dessen Finalaustritt aus der Klemmvorrichtung (2; 102; 102') durchgehend mit dem ersten Wandabschnitt, und vorzugsweise mit dem zweiten Wandabschnitt, in Kontakt ist.

12. Sicherungsvorrichtung (300), umfassend eine Klemmvorrichtung (102; 102') nach einem der Ansprüche 1 bis9, wobei der erste Transportabschnitt (E) von dem zweiten Transportabschnitt (F) durch einen Grenzabschnitt (124, 126) getrennt ist und wobei in einem Zustand, in dem das Seil in der Klemmvorrichtung (102; 102') geklemmt ist, der Grenzabschnitt (124, 126) und eine Seilzugrichtung (Q) einen Winkel (B1) zwischen 90° und 60°, vorzugsweise zwischen 85° und 75°, besonders bevorzugt zwischen 83° und 82° einschließen.

## Claims

1. Safety device (300) for a rope, comprising a clamping device (2; 102; 102'), comprising:
a first wall portion (4; 116) and
a second wall portion (6; 118) opposite the first wall portion (4; 116),
wherein the first wall portion (4; 116) has a surface configuration having a transport element (20, 22; 110, 122; 110', 122', 132, 134) which is formed as structures projecting from the wall portion (4; 116) and/or as structures projecting into the wall portion (4; 116) in portions,
wherein the surface configuration is configured to move the rope into a clamping region (14; 114) of the clamping device (2; 102; 102') in the event of movement within the clamping device (2; 102; 102') in a first axial rope movement direction and which is configured
to move the rope into the clamping region (14; 114) of the clamping device (2; 102; 102') in the event of movement within the clamping device (2; 102; 102') in a second axial rope movement direction counter to the first axial rope movement direction,
**characterized in that**
the surface configuration of the first wall portion (4; 116) has a pair of transport portions comprising a first transport portion (A; E) which is configured to move the rope into a first clamping region portion (10, 136) of the clamping region (14; 114) of the clamping device (2; 102; 102') in the event of movement within the clamping device (2; 102; 102') in a first axial rope movement direction and a second transport portion (B; F) which is configured to move the rope into a second clamping region portion (12; 138) of the clamping region (14; 114) of the clamping device (2; 102; 102') in the event of movement within the clamping device (2; 102; 102') in a second axial rope movement direction counter to the first axial rope movement direction, wherein the first transport portion (A; E) is directly adjacent to the second transport portion (B; F) in the axial rope movement direction.

2. Safety device (300) according to claim 1, wherein, when the rope is laid in the clamping device (2; 102; 102') as in normal operation, the rope and a contact portion of the transport element (20, 22; 110, 122; 110', 122', 132, 134) being at a crossing angle (A1, A2; A3) which is in an angle range between 15° and 75°, preferably in an angle range between 30° and 60°, in particular approximately 45°.

3. Safety device (300) according to either of the preceding claims, wherein, when the rope is laid in the clamping device (2; 102; 102') as in normal operation, an axial rope movement direction is transverse to a rope clamping direction.

4. Safety device (300) according to any of the preceding claims, wherein the transport element (20, 22; 110, 122; 110', 122') is formed as a rib and preferably projects into a clamping region (14; 114).

5. Safety device (300) according to any of the preceding claims, wherein the clamping device (102; 102') is in the form of a pivot element, preferably a rotation element, more preferably a rope pulley.

6. Safety device (300) according to claim 5, wherein the clamping device (102; 102') has a rope deflection portion (123), and in particular a pivot or rotation axle (112) of the clamping device (102; 102') passes through the rope deflection portion (123).

7. Safety device (300) according to any of the preceding claims, wherein the first wall portion (4; 116) and the second wall portion (6, 118) are arranged in such a way that they delimit a tapering clamping region of the clamping device (2; 102; 102').

8. Safety device (300) according to claim 7, wherein the tapering clamping region has a base portion (BA; BA1; BA2).

9. Safety device (300) according to either claim 7 or 8, wherein wall sub-portions of the first wall portion (4; 116) and of the second wall portion (6, 118) which delimit the tapering clamping region over the entire extension thereof are formed free of ribs.

10. Safety device (300) according to any of the preceding claims, wherein the clamping device (2; 102; 102') is configured to bring the rope into a clamping state without a relative movement of elements of the clamping device (2; 102; 102').

11. Safety device (300) according to any of the preceding claims, wherein, when the rope is laid in the clamping device (2; 102; 102') as in normal operation, in a clamping state the rope is constantly in contact with the first wall portion and preferably with the second wall portion between the initial entry of the rope into the clamping device and the final exit thereof from the clamping device (2; 102; 102').

12. Safety device (300), comprising a clamping device (102; 102') according to any of claims 1 to 9, wherein the first transport portion (E) is separated from the second transport portion (F) by a boundary portion (124, 126) and wherein, in a state where the rope is clamped in the clamping device (102; 102'), the boundary portion (124, 126) and a rope pull direction (Q) are at an angle (B1) between 90° and 60°, preferably between 85° and 75°, more preferably between 83° and 82°.

## Revendications

1. Dispositif de blocage (300) pour un câble, comprenant un dispositif de serrage (2 ; 102 ; 102'), comprenant :
une première section de paroi (4 ; 116) et
une deuxième section de paroi (6 ; 118) faisant face à la première section de paroi (4 ; 116),
dans lequel la première section de paroi (4 ; 116) présente une configuration de surface, laquelle présente un élément de transport (20, 22 ; 110, 122 ; 110', 122', 132, 134), lequel est réalisé en tant qu'une structure sortant en saillie par endroits de la section de paroi (4 ; 116) et/ou en tant que structure rentrant en saillie par endroits dans la section de paroi (4 ; 116),
dans lequel la configuration de surface est mise au point
pour déplacer le câble lors du déplacement à l'intérieur du dispositif de serrage (2 ; 102 ; 102') dans une première direction de déplacement de câble axiale dans une zone de serrage (14 ; 114) du dispositif de serrage (2 ; 102 ; 102'), et est agencé pour déplacer le câble lors du déplacement à l'intérieur du dispositif de serrage (2 ; 102 ; 102') dans une deuxième direction de déplacement de câble axiale opposée à la première direction de déplacement de câble axiale dans la zone de serrage (14 ; 114) du dispositif de serrage (2 ; 102 ; 102'), **caractérisé en ce que** la configuration de surface de la première section de paroi (4 ; 116) présente une paire de sections de transport comprenant
une première section de transport (A ; E), laquelle est mise au point pour déplacer, dans une première section de zone de serrage (10 ; 136) de la zone de serrage (14 ; 114) du dispositif de serrage (2 ; 102 ; 102'), le câble lors du déplacement à l'intérieur du dispositif de serrage (2 ; 102 ; 102') suivant une première direction de déplacement de câble axiale, et
une deuxième section de transport (B ; F), laquelle est mise au point pour déplacer dans une deuxième section de zone de serrage (12 ; 138) de la zone de serrage (14 ; 114) du dispositif de serrage (2 ; 102 ; 102') le câble lors du déplacement à l'intérieur du dispositif de serrage (2 ; 102 ; 102') dans une deuxième direction de déplacement de câble axiale opposée à la première direction de déplacement de câble axiale, dans lequel la première section de transport (A ; E) est adjacente à la deuxième section de transport (B, F) directement dans la direction de déplacement de câble axiale.

2. Dispositif de blocage (300) selon la revendication 1, dans lequel, lorsque le câble est placé conformément au fonctionnement prévu dans le dispositif de serrage (2 ; 102 ; 102'), le câble et une section de contact de l'élément de transport (20, 22 ; 110, 122 ; 110', 122', 132, 134) forment un angle d'intersection (A1, A2 ; A3), lequel se situe dans une plage d'angles entre 15° et 75°, de préférence dans une plage d'angles entre 30° et 60°, en particulier est de l'ordre d'environ 45°.

3. Dispositif de blocage (300) selon l'une quelconque des revendications précédentes, dans lequel, lorsque le câble est placé conformément au fonctionnement prévu dans le dispositif de serrage (2 ; 102 ; 102'), une direction de déplacement de câble axiale s'étend de manière transversale par rapport à une direction de serrage de câble.

4. Dispositif de blocage (300) selon l'une quelconque des revendications précédentes, dans lequel l'élément de transport (20, 22 ; 110, 122 ; 110', 122') est réalisé en tant qu'une nervure et de préférence rentre en saillie dans une zone de serrage (14 ; 114).

5. Dispositif de blocage (300) selon l'une quelconque des revendications précédentes, dans lequel le dispositif de serrage (102 ; 102') est réalisé en tant qu'un élément de pivotement, de préférence en tant qu'un élément de rotation, de manière particulièrement préférée sous forme d'une poulie.

6. Dispositif de blocage (300) selon la revendication 5, dans lequel le dispositif de serrage (102 ; 102') présente une section de renvoi de câble (123) et en particulier un axe de pivotement ou de rotation (112) du dispositif de serrage (102 ; 102') traverse la section de renvoi de câble (123) de part en part.

7. Dispositif de blocage (300) selon l'une quelconque des revendications précédentes, dans lequel la première section de paroi (4 ; 116) et la deuxième section de paroi (6, 118) sont disposées de telle manière qu'elles délimitent une zone de serrage se rétrécissant du dispositif de serrage (2 ; 102 ; 102').

8. Dispositif de blocage (300) selon la revendication 7, dans lequel la zone de serrage se rétrécissant présente une section de fond (BA ; BA1 ; BA2).

9. Dispositif de blocage (300) selon l'une quelconque des revendications 7 ou 8, dans lequel des sections partielles de paroi de la première section de paroi (4 ; 116) et de la deuxième section de paroi (6, 118), lesquelles délimitent la zone de serrage se rétrécissant sur la totalité de son extension, sont réalisées sans nervures.

10. Dispositif de blocage (300) selon l'une quelconque des revendications précédentes, dans lequel le dispositif de serrage (2 ; 102 ; 102') est mis au point pour transférer le câble dans un état de serrage sans un déplacement relatif d'éléments du dispositif de serrage (2 ; 102 ; 102').

11. Dispositif de blocage (300) selon l'une quelconque des revendications précédentes, dans lequel, lorsque le câble est placé conformément au fonctionnement prévu dans le dispositif de serrage (2 ; 102 ; 102'), le câble est en contact, dans un état de serrage, en continu avec la première section de paroi, et de préférence avec la deuxième section de paroi, entre sa première entrée dans le dispositif de serrage et sa sortie finale hors du dispositif de serrage (2 ; 102 ; 102').

12. Dispositif de blocage (300) comprenant un dispositif de serrage (102 ; 102') selon l'une quelconque des revendications 1 à 9, dans lequel la première section de transport (E) est séparée de la deuxième section de transport (F) par une section de délimitation (124, 126), et dans lequel pour un état du câble serré dans le dispositif de serrage (102 ; 102'), la section de délimitation (124, 126) et une direction de traction de câble (Q) forment un angle (B1) entre 90° et 60°, de préférence entre 85° et 75°, de manière particulièrement préférée entre 83° et 82°.
